# EUROPEAN PATENT APPLICATION

(11) **EP 0 785 176 A1**
(43) Date of publication of application: **23.07.1997**
(21) Application number: 97200078.0
(22) Date of filing: 17.01.1997
(51) Int. Cl.: C05F 17/00, C05F 3/00, C05F 3/06, B01D 3/34, B01D 1/30, C02F 3/20, C02F 3/10

(54) **Method and apparatus for a complete, ecological and small-scale treatment of manure**

(30) Priority: 18.01.1996 NL 9610021
(71) Applicant: Kuiper, Dirk, NL-2301 EG Leiden (NL)
(72) Inventor: Kuiper, Dirk, NL-2301 EG Leiden (NL)

(57) **Abstract**

The invention offers a method and apparatus for the complete, ecological treatment of manure, or mixtures of manure, from pigs, cattle, chickens and other animals. The method comprises a combination of a number of connected emission-free processes and is carried out at the farm. The manure is converted into a small amount of emission-free compost with fertilizing value, while the stable becomes inherently emission-free.

## Description

The present invention offers a method for the complete, ecological treatment of manure, such as from pigs and cows, on a small scale, for one farm or a combined group of farms. In addition, the invention offers apparatus allowing for the effective implementation of this method.

Intensified pig and cattle farming causes a considerable environmental problem. The government has limited the amount of manure which is allowed for use for agricultural purposes. Especially in case of pig farms, the produced amount of manure exceeds by far the allowed amount for the usually small available land areas.

In some cases the excess manure can be used on nearby agricultural land, but this is not available in many situations. Thus, the main portion of the manure has to be transported to remote agricultural areas. The cost of transportation is high, because the majority of the manure is just water and only a small part consists of fertilizing minerals. In addition, when the manure is spread out over land a strong emission takes place of both ammonia and bad smell. A similar strong emission also emanates from the stables as a consequence of the air ventilation. This fact demonstrates as well that the animals in the stable are living in a bad atmosphere which certainly produces a strong negative effect on their well-being.

Attempts have been made to process the manure in big centralized treatment plants. These efforts have not been successful: one of the reasons is the high cost of transport of the manure.

The present invention aims at providing a method and apparatus for the complete, ecological treatment of manure at the farm, overcoming all the referenced disadvantages while, in addition, the stables become emission-free.

According to the method of the invention, the first step is the separation of the manure into a "solid fraction", containing most of the solids, and a "liquid fraction", the stale, containing little or no solids. This separation is followed by a combined composting process of the solid fraction under uniform, forced and controlled aeration and wetting conditions, resulting in a reduced amount of emission-free compost.

During the composting process oxygen is used for the biological conversion of organic material into carbon dioxide and water. The necessary aeration should be carried out in such a manner that no undesired gases are liberated, such as ammonia. Traditionally, manure is mixed with straw and then put on a dunghill. The stale leaks out of the dunghill and the solids are composted in a natural way. However, the consistency of the solids is such that air cannot easily penetrate the dunghill. As a consequence, the complete composting process takes one and a half to two years. With the present high production farms, this natural system would require huge dunghills. Even when the composting process is accelerated by periodically ploughing the dunghill, the process still takes about six months. It has been demonstrated that the solid part of cow manure mixed with straw, having a dry matter content of 35%, can be composted in about four weeks, if the material is ploughed periodically. All-these composting methods have the important disadvantage of liberating considerable amounts of ammonia. Moreover, during the composting process heat is generated, which can result in increased temperatures, up to about 70 °C, in the centre of the dunghill, while a thick layer around this centre is much cooler. Thus, the dunghill is not homogeneously composted and the resulting compost will release ammonia when used on land. In addition, the compost will not be free of pathogens and not all of the undesired plant seeds present in the manure are killed.

During the composting process water vapour is liberated from the composting material. Over time, the material becomes too dry for an effective process and it has to be wetted again.

According to the method of the invention, the separated solid fraction of the manure is homogeneously composted in a reactor under uniform, forced and controlled aeration and moist conditions in such a manner that the temperature of the composting material remains between 50 °C and 75 °C during at least 8 days. Also, the removed air is stripped of the ammonia which was taken up during the process.

The aeration could be accomplished by blowing pressurized air through the composting material in the reactor. However, no air should escape from the reactor, because it could contain ammonia and other hazardous components. The reactor should be free from any air leakages, which is a difficult requirement at a farm site. It is more practical to avoid the leakages by forcing the air through the material by suction instead of by blowing. The ammonia and other components can be stripped from the removed air by using, for example, an air scrubber.

In the method of this invention the aeration of the solid fraction of the manure is carried out by continuous or intermittent suction of air through the material, which should therefore have a consistency suitable for this purpose.

This suitable consistency of the solid fraction is characterized first by an open structure and easy air passage with a low pressure drop. In addition, since the required height of the material in the reactor can exceed, for example, three meters, the open structure should not be compressed under the weight of the material itself. Furthermore, it should be possible to adjust to a proper value the dry matter content of the solid fraction which is to be separated from the various types of manure.

The solid fraction with the required consistency and composition can be obtained by separation from different types of manure (such as from sows, porkers, cattle), for example by means of a screw press, plunger press, screen of filter belt press, centrifuge, rotating drum screen, or any other suitable apparatus or combination of these apparatus. Combinations with other apparatus are also possible, including sieve bends and settlers for example. Such a combination can comprise two or more separate apparatus, but also one compound apparatus.

By use of such an apparatus, a solid fraction can be obtained with a dry matter content of more than 25%. This material is flocky and friable and, in certain situations, it may already be suitable for composting. If desired this friable material can be compressed into stronger pellets or small bars, using a suitable pelleting press. For this purpose it is also possible to combine a screw press with a pelleting press.

According to the method of the invention the solid fraction is separated from the manure as a flocky material or as pellets or small bars, with a dry matter content of at least 25%, which materials are easily permeable by air and are not compressed in a composting reactor by their own weight.

The method of the invention can be used for various types of manure which can differ considerably with respect to composition and properties. Important are the differences of the N-P-C ratio, the dry matter content and the content of fibres and fat and additional materials such as straw. Moreover, the composition of the manure changes considerably during storage as a result of biological degradation. In order to separate from these various types of manure solid fractions which possess the required properties concerning air permeability, strength and dry matter content, the operating conditions have to be adjusted specifically for each type of manure. These operating conditions may differ considerably. It is also possible that additional additives or supplements are necessary in order to realise a proper separation and composting process and a proper final product, the compost.

As an example of a suitable combination of manure separation and composting, sow manure with a dry matter content of 5% was separated in a flocky solid fraction with a dry matter content of 33-35%, and a liquid fraction. The separation was carried out by means of a combination of a sieve bend and a screw press, and also by the combination of a settler and a screw press. The solid fraction was subsequently composted in a reactor of 1,25 m high and 5 m long, under uniform, controlled aeration by means of an air suction system. Within two days the temperature increased to 60 °C. During the following 16 days the temperature was kept more or less constant between 60 °C and 75 °C. Then the material was allowed to cool to ambient temperature. The product was a homogeneous compost with a dry matter content of 55%.

The air permeability and the mechanical strength of the flocs, pellets and bars can be improved by the addition of suitable filling materials to the manure, before or during the separation. These materials will be mixed and separated with the solid fraction. Suitable fillers are, for example, (chopped) straw, hay and grass, saw dust, wood chips, prunings, agricultural and garden waste, waste from the food industry, waste from vegetables and fruit, in fact all materials with a certain strong structure which are partly or completely degradable during the composting process.

In the method of the invention filling materials are added to the manure, either before the separation of the solid fraction from the manure, in which case the materials are separated together with the solid fraction, or during the separation of the solid fraction from the manure, and partly or completely decomposed during the composting process.

For the same purpose, it is also possible to mix the solid fraction after the separation with the above mentioned biodegradable materials, as well as with non-biodegradable materials. These may consist of different types of plastic (waste). After composting, these materials have to be removed by sieving and can be reused.

In the method of this invention, biodegradable and non-biodegradable materials can also be mixed with the solid fraction after it is separated from the manure.

The addition of degradable filling materials can be advantageous for the quality of the final compost, because its composition and C-N-P ratio can, to a certain extent, be tailored in this way.

Before, during or after the separation of the solid fraction from the manure, certain materials or compounds can be added which promote the composting process still further. These materials and compounds may be, for example, chemicals, micro-organisms and enzymes. These materials possibly promote the decomposition of organic material and may prevent ammonia and odors from being liberated.

According to the method of this invention, much more filling material can be added to the solid fraction than necessary for a better air permeability and mechanical strength. Thus, the method can be used as well for the combined treatment of manure and various types of organic wastes, such as sludge from wastewater treatment and waste from the food industry for example, with as a final product an organic compost with fertilizing value and soil amending properties.

The manure is separated into a solid fraction and a liquid fraction containing only a small amount of solid material. However, even this small amount of solids can be disadvantageous to the further treatment of the liquid fraction. These solids can easily be removed by means of a sieve bend for example, but as well by filtration using straw, hay or any other suitable organic material as a filter. After a while the filter will become clogged, because of the collected solid material. This clogged filter material will be used as filling material for the solid fraction and therefore composted.

According to the method of this invention, the separated liquid fraction is filtered through organic material, such as straw for example, which after the filtration is added to the solid fraction and composted.

As described above, the composting process is carried out under controlled aeration and wetting conditions, in such a manner that the temperature is more or less constant at a suitable value between 50 °C and 75 °C. At these high temperatures, the composting process takes only one to four weeks. This is a much shorter period than required for traditional composting. As a consequence, the composting reactor can have relatively small dimensions, which is an important advantage. As a result of the high temperature over a period of some weeks, the compost becomes pathogen-free. In addition, any plant seeds which are present in the manure will not germinate if the final compost is used on land. This is an important requirement for the agricultural use of the compost.

According to the method of the invention, the composting is carried out at such an increased temperature that the final compost becomes pathogen-free and germination-free.

The composting process is carried out in a reactor, for example a rectangular reservoir with insulated walls and a minimum height of 0.5 m. The reactor is provided with an air extraction system on the bottom. This may consist of a few perforated tubes, or a bottom with many small channels, or a perforated or porous bottom with room underneath for the air extraction. These devices ensure a uniform air stream through the solid fraction. This air extraction system is connected to the suction side of a blower. The pressure side is connected to an air scrubber such as described hereafter. The extraction system is constructed in a manner which allows the removal of possible leakage water.

The air stream through the reactor can be controlled by adjusting the number of revolutions per minute of the blower or by a control valve. It is also possible to use the blower periodically instead of continuously. the control of the air stream is, among others, based on the temperature of the composting material.

The solid manure fraction to be composted is uniformly spread over the reactor and is coverd with a layer of air permeable material, which can be, for example, a 10 cm thick layer of earlier composted manure, or any other suitable material.

The composting process is promoted by periodically lightly shaking the solid fraction in the reactor. This can be achieved by a suitable device which pushes the material up and down in such a manner that it is mixed.

The composting reactor can be placed either outdoors or indoors, but if placed outdoors it should be protected against rainfall and other atmospheric influences.

The reactor can be situated at a fixed place, but it can also be portable, such as a transportable container for instance.

It is also possible to construct a reactor of a different shape, such as a special pit or an above ground reactor with earthen walls.

According to the present invention, the composting process is carried out in a composting reactor with insulating walls and with an air extracting device on the bottom providing a uniform air flow through the composting material. Furthermore, the reactor is provided with a temperature control system and a device to shake or mix the composting material.

According to the method of the invention, the solid fraction in the reactor is covered with an insulating, air permeable layer, such as a layer of earlier obtained compost or any other suitable material, such as a suitable blanket, for example,

While the first part of the method of the invention is concerned with the manure separation and the composting of the solid fraction, the second part is concerned with the treatment of the liquid part, the stale, and the complete method.

The stale contains high concentrations of ammonia as well as organic nitrogen compounds such as urea and proteins. In addition, the stale contains phosphate, chloride and potassium. The stale cannot be used as fertilizer as it causes considerable ammonia emission. In order to avoid this, a nitrification/ denitrification process, N/D, can be applied. In using this process the stale is aerated, converting the biodegradable organic compounds into carbon dioxide, and most of the nitrogen compounds are converted into nitrogen gas which disappears in the air, while the remaining nitrogen is converted into soluble nitrate. The resulting liquid can be used as fertilizer, but it has a fairly high concentration of salts (Cl, K), which is a disadvantage. The fertilising value of this liquid is limited, which makes transportation to remote agricultural areas expensive.

According to the method of the invention, the liquid fraction of the manure is first subjected to a nitrification/ denitrification process and then evaporated for the most part.

The N/D process can be carried out in one or more reactors with an aeration device and preferably equipped with a "sludge-on-carrier" system, such as a system with many fibers as a carrier which are properly arranged, as decribed in the Dutch patent application no 9500336.

The stale which is oxidized in this manner can subsequently be evaporated using the ventilation air from the stable. This is a large air stream which is not saturated with water, and can be used for evaporation of the stale in a suitable apparatus. The advantage of this procedure is the low energy consumption, because the stable air is already removed by ventilators.

According to the method of the invention, the aerated liquid fraction of the manure is evaporated in a suitable evaporator, using the ventilation air from the stable. As an example, 2.3 m³ of the aerated liquid fraction with a dry matter content of 1.9% was evaporated by means of stable air, until the volume was reduced to 155 1. The dry matter content of the final liquid was 29%, whereas after centrifugation it was 14%. This evaporation was carried out by means of a cylindrical 2 m high evaporator, similar to a common air scrubber.

A suitable evaporator should have low resistance for the large air stream. Furthermore, the evaporator should not be fouled by dust particles from the air, by precipitating salts from the liquid or by biological sludge. A suitable evaprator is equipped with a compartment with a contact body which provides an intensive, counter current contact between the liquid and the air. The contact body can be comprised of suitable materials of different shapes such as those used for air scrubbers. However, most of these materials do not anticipate the above mentioned requirements. An advanced and suitable contact body is comprised of a great number of horizontally placed fibres or wires. The distance between the fibers is such that the air resistance is very low and falling droplets touch a fibre after short distances and break. The distance between the fibers is more than 1 mm for example.There is no fouling of these fibres because of an intensive vibration due to the air stream. The vibration can also be realised by a special vibration device which operates periodically or continuously. In a practical situation, the stale will be circulated through the evaporator until a certain volume reduction has been reached. The air leaves the evaporator from the top after it has passed through a demister for the removal of small droplets which have been carried along.

According to the invention, the aerated liquid fraction is evaporated by means of an air scrubber type evaporator, provided with any type of suitable material for an intensive water-air contact, but preferably a contact material which consists of a great number of horizontally placed fibres or wires, at short distances, which vibrate during operation as a result of the velocity of the air stream, or because of a mechanical vibration mechamism, thus offering a highly effective and compact system.

The above described evaporator actually functions both as evaporator and air scrubber. The stable air contains ammonia, offensive odor and dust. If this air is blown through the "evaporator", the ammonia, odor and dust particles are absorbed by the circulating aerated liquid fraction. The absorption of ammonia is enhanced by the fact that the liquid becomes slightly acidic. The reason is that during the aeration, nitrogen compounds are converted into nitric acid, which lowers the pH. Furthermore, during the aeration of the liquid fraction, carbon dioxide can be removed by a small ventilator and injected into the evaporator/scrubber. Part of the carbon dioxide will be absorbed by the liquid, at least enough to keep the liquid slightly acidic and to transfer the present ammonia into ammonium.

According to the method of the present invention, the aerated liquid fraction is evaporated by means of the stable air while at the same time ammonia, odor and dust are stripped from the air and absorbed by the liquid.

As described previously, during the composting process air is extracted through the composting solid fraction by means of a blower. This air stream contains possibly a small amount of ammonia and certainly all carbon dioxide which is formed during the composting process. The outlet of the blower is blown into the above mentioned evaporator/scrubber. The small amount of ammonia will be absorbed by the liquid while the much larger amount of carbon dioxide will contibute to slightly acidifying it.

In accordance with the method of the present invention, the outlet air streams from the N/D reactor and the composting reactor are fed into the evaporator/scrubber, or these air streams are first fed into a separate small scrubber, while the scrubbing liquid is fed into the evaporator afterwards.

The absorption of ammonia from the stable air by the circulating aerated liquid fraction to be evaporated is promoted by the low pH of the liquid. This absorption can also be enhanced by additional acidification of the liquid, and also by removal of the ammonia from the liquid by any suitable method, such as by chemical or biological oxidation or adsorption or combinations of these.

According to the method of the invention, the ammonia in the circulating liquid of the evaporator/scrubber is physically, chemically or biologically converted or adsorbed.

The aerated liquid fraction is evaporated and the volume is considerably reduced. The remaining liquid contains organic material and phosphate, potassium, chloride and ammonium carbonate.

In the method of the invention the concentrated liquid fraction after the (partial) evaporation is brought to the composting reactor for complete evaporation while the ammonia is converted into nitrate.

In this manner a final compost is obtained containing the same amount of minerals (P, K, Cl) as the manure from which the compost has been derived. The amount of nitrogen is less than the original amount in the manure, because of the denitrification. The nitrogen is present as nitrate and the compost does not contain any ammonia. Thus, no ammonia emission from the compost will occur during transport or use on land. Furthermore, the compost can be used for the same piece of land as would be used for the original manure. However, the amount of the compost is much less, only 5-15% of the original amount of manure, and as a dry material, it is much easier to spread over land than manure. The elemental composition of the compost can be adjusted to a certain extent to specific needs of the user, by mixing composts from different types of manure, or by composting mixtures of different types of manure, or by the addition of other materials to the composting solid fraction or to the compost. Moreover, the potassium-plus-chloride content of the compost can be decreased by not, or only partly, adding the evaporated liquid fraction to the composting solid fraction. The unused part of the evaporated liquid fraction can then be used as a potassium rich fertilizer for certain specific crops.

The previously described N/D process is a biological process which produces a certain excess amount of biological sludge. This excess sludge can be put in the manure cellar where it can start the N/D process to a certain extent. It is also possible to add the sludge to the composting solid fraction.

In the method of the invention, the excess biological sludge from the N/D process in the aeration tank is added to the manure reservoir or to the composting solid fraction.

There is an important difference between the chemical composition of the different types of manure, such as from piglets, sows, porkers, cattle and chickens. The previously presented methods and apparatus are suitable for all types of manure and mixtures of manure and additional (waste) material. However, the method and apparatus are also suitable for stables provided with a flushing system for the manure. The manure is normally collected in the manure cellar which is underneath the stable. Using a flushing system, the manure cellar is flushed with a flushing liquid once or several times a day. The manure is collected in a collection reservoir and roughly separated into a solid fraction and a liquid fraction. The latter is used again as flushing liquid, possibly after a certain treatment.

Using the method of the present invention, it is possible to separate the manure from a collection reservoir continuously or semi-continuously in a solid fraction which is suitable for composting, and a liquid fraction which is collected in a buffer reservoir. This reservoir is aerated and the liquid fraction is (partly) biologically oxidized. After separation of the biological sludge, part of the liquid can be used as flushing liquid for the manure cellar. The oxidized flushing liquid can provide a certain denitrification in the manure cellar, and it limits the emission of ammonia and odor inside the stable considerably. The excess liquid in the buffer tank can be added to another N/D reactor or directly to the evaporation system.

The invention includes several parts which are combined into one integrated system. However, the different parts can also be used separately. For example, the evaporated, concentrated liquid fraction can be used separately. It is also possible to use the liquid from the N/D reactor directly, without evaporation, and the composting fraction can be used separately as well. The original object of the invention is the use of it for separate farms, but it can be extended to groups of several farms.

The described method of the invention is concerned with batchwise manure treatment. Both the solid and liquid fractions are processed during a cycle of about three weeks. During this period the system requires very little operating time from the farmer. During the change from one cycle to the next, only one day of operating time is required. This limits the operating cost considerably. The cost of the equipment is also limited, because the various parts are not sophisticated and few controls are necessary. Therefore, the invention offers a complete, ecological treatment of manure at an acceptable cost.

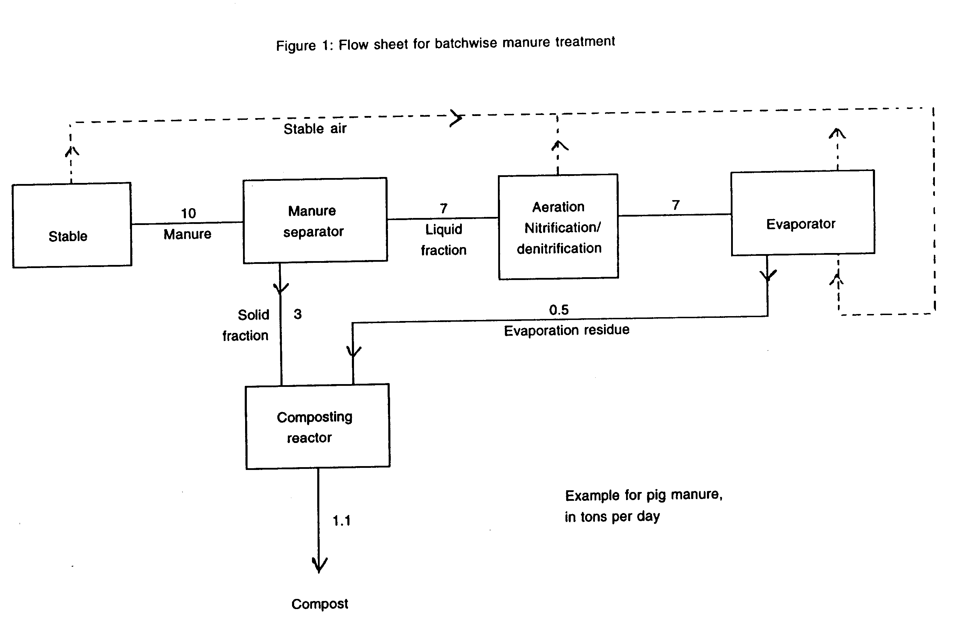

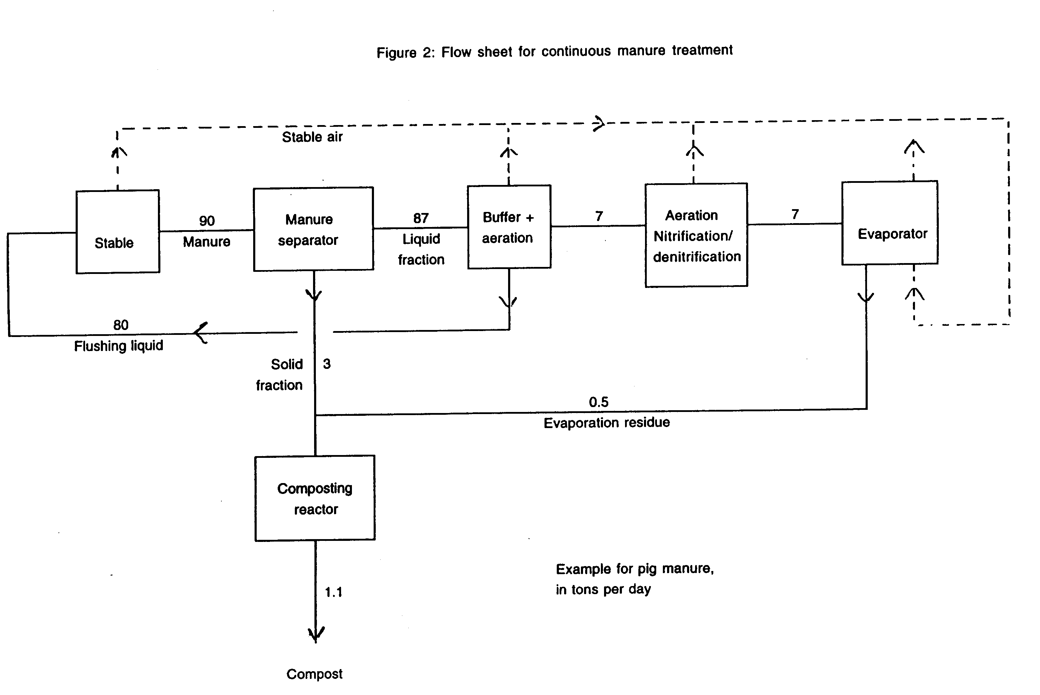

When the method is used with a manure flushing sytem, the manure is treated more or less continuously. This requires somewhat more attention and operation, but on the other hand it offers certain advantages. Both ways of operation, batchwise and continuous, are illustrated by the annexed figures 1 and 2.

The presented method and apparatus of this invention offer a manure treatment resulting in only a small amount of compost with almost the same fertilizing value as the much larger amount of manure from which it is obtained. The homogeneous compost has a financial value, contrary to the untreated manure, the transportation of which is costly. Furthermore, the method and apparatus of the invention have the inherent advantage of an emission free stable, which is costly to achieve by other means.

The present invention provides an ecological manure treatment, resulting in only a small amount of homogeneous and emission free, valuable compost, and an emission free stable at an acceptable cost.

## Claims

1. Method and apparatus for the complete, ecological treatment of manure from sows, piglets, porkers, cattle, chickens and other animals, and mixtures of these, characterized in that the method is carried out at the farm, by which at the same time the stable becomes emission free and the manure is transformed into a small amount of a homogeneous, emission free compost with fertilizing value.

2. Method according to claim 1, characterized in that said method comprises a combination of a number of accommodated and connected processes.

3. Method according to claim 1 and 2, characterized in that the manure is first separated in a "solid fraction", containing nearly all solid constituents, and a "liquid fraction", the stale, after which the solid fraction is composted and the liquid fraction is subjected to a process of nitrification/denitrification, N/D, and subsequently evaporated, whereupon the remaining small amount of liquid can be added to the composting solid fraction.

4. Method according to claims 1-3, characterized in that the composting process takes place under conditions of forced and controlled aeration, in addition to which the air is passed through the solid fraction by blowing or by suction, either continuously or periodically.

5. Method according to claims 1-4, characterized in that the air flow passing through the solid fraction during the composting process and the amount of water which is added during the process, are controlled in such a manner that the temperature of the composting material varies only little, not more than 10-15 °C for example, during a substantial period of the composting process.

6. Method according to claims 1-5, characterized in that the temperature of the composting material is kept at a sufficiently high level during a sufficiently long period to obtain a pathogen and germination free compost.

7. Method according to claims 1-6, characterized in that the temperature of the composting material during a substantial period is between 50 and 75 °C.

8. Method according to claims 1-7, characterized in that the separation of the manure is carried out in such a manner that the solid fraction consists of a friable, flocky material or a pellet type or bar type material, with an open structure, and enough air permeability and mechanical strength for effective, forced aeration during the composting process.

9. Method according to claims 1-8, characterized in that the air permeability and mechanical strength of the solid fraction are such that the composting process proceeds adequately when the height of the material in the reactor is between 0.5 and 6 m.

10. Method according to claims 1-9, characterized in that before or during the separation of the solid fraction filling materials are added to the manure which are separated with the solid fraction and which improve its air permeability and mechanical strength.

11. Method according to claims 1-10, characterized in that filling materials added to the manure consist of (chopped) straw, hay and grass, sawdust, wood chips, prunings, agricultural and garden waste, waste from the food industry, from vegetables and fruit, or any other suitable material which provides additional mechanical strength to the solid fraction and which itself is partly or completely decomposed during the composting process.

12. Method according to claims 1-11, characterized in that no filling material is added before the separation of the solid fraction, but that after the separation, the solid fraction is mixed with materials providing improved air permeability and mechanical strength.

13. Method according to claims 1-12, characterized in that the materials which are mixed with the solid fraction after the separation are partly or completely decomposed during the composting process, such as, for example, (chopped) straw, hay, grass, sawdust, wood chips, prunings, agricultural and garden waste, waste from the food industry, from vegetables and fruit, or any other suitable material which provides additional mechanical strength.

14. Method according to claims 1-13, characterized in that before, during or after the separation of the solid fraction filling materials are added or mixed in, which are not decomposed during the composting process.

15. Method according to claim 14, characterized in that the added, non-decompostable materials consist of plastic, glass, rubber, ceramics or any other suitable material, and are separated from the compost after composting and possibly reused.

16. Method according to claims 1-15, characterized in that the composted solid fraction is a mixture of two or more types of manure.

17. Method according to claims 1-16, characterized in that certain organic or inorganic materials are added to the manure to be separated, or the separated solid fraction, in order to adjust the composition of the final compost.

18. Method according to claims 1-17, characerized in that before, during or after the separation larger amounts of organic waste material are added, with the goal to compost the waste material together with the manure, thus obtaining a product with a certain fertilizing value and possibly soil amending properties.

19. Method according to claims 1-18, characterized in that before, during or after the separation of the solid fraction certain materials are added, promoting the composting process and/or the decomposition or transformation of ammonia and odor, such as micro-organisms, enzymes and chemicals.

20. Method according to claims 1-19, characterized in that the manure with or without additions and directly or after a settling is separated into a "solid fraction" and a "liquid fraction" by means of, for example, a screw press, plunger press, bend sieve, rotating drum screen, filter belt press, centrifuge, or any other suitable apparatus or combinations thereof, in such a manner that the separated solid fraction consists of a flocky, granular or bar type material with a dry matter content of at least 25% and a high air permeability and mechanical strength, in addtion to which the granular or bar type shape can be obtained by means of a special apparatus such as a pelleting press, which can also be combined into one compound with, for example, a screw press.

21. Method according to claims 1-20, characterized in that the separated liquid fraction is filtered for removal of the still present suspended solids by means of a sieve bend or a filter with straw, hay, organic waste or any other suitable organic material as filter medium, which material is after the filtration used as filling material for the solid fraction.

22. Apparatus for the composting of the separated solid fraction of the manure, in accordance with claims 1-21, characterized in that said apparatus or composting reactor consists of a reservoir with insulating walls, in which the composting material can be put as a layer which is at least 0.5 m high, which apparatus is provided with a suitable air extraction system on the bottom, and which apparatus is also provided with means to measure the temperature at more than on place, and which apparatus is, in addition, provided with a mechanism to shake or mix the composting material continuously or periodically.

23. Apparatus according to claim 22, characterized in that the apparatus or composting reactor is either transportable or fixed at one place.

24. Method according to claims 1-23, characterized in that the composting material is put into the composting reactor as a uniform layer which is covered with a layer of previously composted manure with a thickness of at least 5 cm, or which is covered with a simliar insulating and air permealbe material or with an air permeable cloth or blanket.

25. Method according to claims 1-24, characterized in that the separated liquid fraction is continuously or intermittently aerated, by which the main part of the degradable organic material is converted into carbon dioxide, and the nitrogen compounds into nitrate and nitrite, and subsequently partly reduced to molecular nitrogen.

26. Apparatus for the aeration of the liquid fraction, according to claim 25, characterized in that the aeration device consists of a "fine bubble aeration", which aeration can be combined with a "sludge-on-carrier" system which, for example, consists of a huge number of thin fibres, properly arranged in the aeration reactor.

27. Method according to claims 1-26, characterized in that a considerable part of the aerated and oxidized liquid fraction of the manure is evaporated in a suitable apparatus by means of the ventilated air from the stable, while at the same time this evaporator functions as air scrubber, thus removing ammonia, smell and dust particles from the stable air.

28. Apparatus for the evaporation of the aerated liquid fraction of the manure, according to claims 1-27, characterized in that the apparatus provides an intensive contact between the countercurrent air and liquid flows by means of a great number of horizontally placed fibres or wires with a mutual distance of at least 1 mm, which fibres or wires vibrate as a result of the air stream or by means of a special vibration mechanism, while the evaporator is at the top provided with a demister to collect small droplets from the outlet air stream.

29. Method according to claims 1-28, characterized in that the liquid to be evaporated is circulated from a buffer tank through the evaporator.

30. Method according to claims 1-29, characterized in that the ammonia and smell which are absorbed by the circulating liquid from the stable air are immoblized, decomposed or transformed by oxidation or adsorption, or a combination of these, or by a biological process.

31. Method according to claims 1-30, characterized in that the remaining small amount of evaporated liquid is added to the composting solid fraction in the composting reactor and then further evaporated by means of the heat released during the composting process.

32. Method according to claims 1-31, characterized in that the air which is used for the aeration of the liquid fraction is collected at the top of the aeration tank and removed to the evaporator, as is the air from the composting reactor, while as an alternative both air flows are scrubbed in a separate small scrubber, after which the scrubbing water is added to the liquid in the evaporator.

33. Method according to claims 1-32, characterized in that the produced compost is pelleted before or after possible further drying.

34. Method according to claims 1-33, characterized in that said manure treatment is carried out either batchwise, over successive periods of e.g. three or four weeks, or continuously, the latter version including a system for flushing the manure in the stable, using circulating liquid fraction as flushing liquid, which liquid has previously been, for the most part, biologically oxidized in a buffer tank with sludge settler, which buffer tank, as well as the manure separation apparatus, is part of the circulation system, while the excess liquid fraction and the separated solid fraction are further treated in accordance with the invention; the method is also characterized in that the individual processes and apparatus, of which the treatment in both instances, batchwise and continuous, is composed, are used separately.

35. Method according to claims 1-34, characterized in that the combined manure of more than one farm is treated.

36. Method according to claims 1-35, with the principal object to offer a complete, ecological manure treatment at the farm.
